(19) Europäisches Patentamt / European Patent Office / Office européen des brevets

(11) **EP 4 382 382 A1**

(12) **DEMANDE DE BREVET EUROPEEN**

(43) Date de publication:
**12.06.2024 Bulletin 2024/24**

(21) Numéro de dépôt: **23213904.8**

(22) Date de dépôt: **04.12.2023**

(51) Classification Internationale des Brevets (IPC):
**B60W 30/12** *(2020.01)* **B62D 15/02** *(2006.01)*

(52) Classification Coopérative des Brevets (CPC):
**B60W 30/12; B62D 15/025;** B60W 2050/0008;
B60W 2050/0012; B60W 2540/18; B60W 2540/215;
B60W 2552/53

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **05.12.2022 FR 2212759**

(71) Demandeur: **Renault s.a.s**
**92100 Boulogne Billancourt (FR)**

(72) Inventeurs:
• **DAVINS, Joan**
**78084 Guyancourt cedex (FR)**
• **QUILLIARD, Raphael**
**78084 Guyancourt cedex (FR)**

(54) **PROCÉDÉ DE PILOTAGE D'UN VÉHICULE DANS SA VOIE DE CIRCULATION**

(57) L'invention concerne un procédé de pilotage d'un véhicule automobile (10) circulant sur une voie de circulation (31) d'une route (30), comprenant des étapes de :
- acquisition des lignes de bord (33, 35) de ladite voie de circulation,
- détermination d'une ligne médiane (T0),
- acquisition d'un écart latéral (y) entre le véhicule automobile et la ligne médiane,
- calcul d'une consigne de pilotage du véhicule automobile, et
- pilotage par le calculateur (11) d'un actionneur de direction dudit véhicule.

Selon l'invention, lorsque deux conditions sont réunies, à savoir :
- qu'un conducteur (40) du véhicule exerce une action pour commander un décalage du véhicule par rapport à ladite ligne médiane puis qu'il cesse cette action, et
- que, au moment où il cesse ladite action, l'écart latéral est supérieur à un seuil d'écart, ladite consigne de pilotage est déterminée pour que le véhicule automobile suive une ligne latérale décalée latéralement de la ligne médiane.

[Fig. 1]

EP 4 382 382 A1

**Description**

**Domaine technique de l'invention**

La présente invention concerne de manière générale les aides à la conduite de véhicules automobiles.

L'invention concerne plus précisément un procédé de pilotage d'un véhicule automobile circulant sur une voie de circulation d'une route, comprenant des étapes de :

- acquisition de données relatives à des lignes de bord de ladite voie de circulation,
- détermination d'une ligne médiane de ladite voie de circulation compte tenue desdites données,
- acquisition d'un écart latéral entre le véhicule automobile et la ligne médiane,
- calcul, par un calculateur embarqué dans ledit véhicule automobile, d'une consigne de pilotage du véhicule automobile en fonction de ladite ligne médiane, et
- pilotage par le calculateur d'un actionneur de direction dudit véhicule automobile, selon ladite consigne de pilotage.

L'invention concerne également un véhicule automobile adapté à mettre en oeuvre un tel procédé. Elle s'applique plus particulièrement aux voitures et autres engins motorisés circulant sur routes.

**Etat de la technique**

Dans un souci de sécurisation des véhicules automobiles, on équipe actuellement ces derniers de systèmes d'aide à la conduite voire de systèmes de conduite hautement automatisée.

Il s'agit typiquement de systèmes de maintien au centre de la voie (plus connus sous l'acronyme anglais de LKA pour « Lane Keeping Assist » ou LCA pour « Lane Centering Assist »).

Un tel système a besoin, pour fonctionner, de connaître la position des bords de la voie de circulation empruntée par le véhicule. Actuellement, il est connu pour cela d'utiliser un capteur, tel qu'une caméra, qui embarque des moyens de traitement d'images afin de déterminer la position de chacune des lignes de marquage des bords de voie.

Un calculateur embarqué dans le véhicule peut alors en déduire la position de la ligne médiane de la voie de circulation empruntée, ce qui lui permet de piloter de manière automatique le véhicule de telle sorte qu'il suive cette ligne médiane.

Il peut arriver, pour diverses raisons, que le conducteur exerce sur le volant une action pour décaler le véhicule de cette ligne médiane. C'est typiquement le cas lorsqu'il souhaite se décaler dans la droite de sa voie de circulation parce qu'il va croiser un véhicule particulièrement large circulant sur la voie de circulation opposée, à sa gauche.

Lors d'un tel décalage, la fonction LCA laisse le véhicule se décaler et ne se désactive pas complètement, sauf sous certaines conditions, par exemple si le véhicule sort de sa voie de circulation.

Ainsi, dès que le conducteur cesse de tourner le volant pour décaler le véhicule, la fonction LCA est prévue pour se réactiver et ramener le véhicule le long de la ligne médiane.

Cette solution n'est toutefois pas entièrement satisfaisante pour le conducteur, notamment lorsque ce dernier souhaite que le véhicule resté décalé par rapport à la ligne médiane plus longtemps.

**Présentation de l'invention**

Afin de remédier à l'inconvénient précité de l'état de la technique, la présente invention propose, sous certaines conditions, de permettre au véhicule de suivre de manière automatique une trajectoire décalée de la ligne médiane (c'est-à-dire une trajectoire parallèle à cette ligne médiane mais écartée d'une distance non nulle).

Plus particulièrement, on propose selon l'invention un procédé tel que défini dans l'introduction, dans lequel il est en outre prévu :

- de vérifier si deux conditions sont réunies, à savoir :

i) qu'un conducteur du véhicule automobile exerce sur une interface du véhicule automobile une action pour commander un décalage du véhicule automobile par rapport à ladite ligne médiane puis qu'il cesse cette action, et
ii) que, au moment où il cesse ladite action, l'écart latéral est supérieur à un seuil d'écart, puis

- si ces conditions sont réunies, de déterminer ladite consigne de pilotage de telle manière que le véhicule automobile suive une ligne latérale décalée latéralement de la ligne médiane.

Ainsi, grâce à l'invention, lorsque le conducteur exerce une action sur la direction du véhicule pour décaler ce dernier de la ligne médiane et que cette action peut être interprétée comme signifiant que le conducteur souhaite que le véhicule reste décalé de la ligne médiane, le calculateur pilote le véhicule pour suivre une ligne distante de la ligne médiane.

En d'autres termes, le véhicule ne revient pas immédiatement vers la ligne médiane dès que le conducteur cesse son action sur la direction du véhicule. Ainsi, le conducteur n'est pas forcé de retenir le volant pour que le véhicule reste décalé de la ligne médiane.

De manière préférentielle, le calculateur est programmé pour faire revenir le véhicule vers cette ligne médiane plus tard, après une durée prédéterminée de plusieurs secondes.

La trajectoire décalée que le véhicule suit pendant ces quelques secondes est de préférence déterminée en fonction de la configuration de la voie de circulation, si bien qu'elle ne varie pas ou peu d'une fois à l'autre, ce qui donne un sentiment de confiance au conducteur.

De ce fait, lorsque le conducteur décale le véhicule de la ligne médiane de façon à ce qu'il suive une première trajectoire puis que le calculateur reprend la main et suit ensuite une seconde trajectoire décalée de la ligne médiane, les deux trajectoires peuvent être décalées latéralement l'une par rapport à l'autre (les écarts latéraux entre ces trajectoires et la ligne médiane peuvent être différents).

D'autres caractéristiques avantageuses et non limitatives du procédé de pilotage conforme à l'invention, prises individuellement ou selon toutes les combinaisons techniquement possibles, sont les suivantes :

- ladite consigne de pilotage est déterminée pour que le véhicule automobile suive la ligne latérale uniquement si ledit écart latéral est resté, pendant que le conducteur exerçait ladite action, supérieur audit seuil d'écart pendant une durée supérieure à un seuil de temps ;
- ledit seuil d'écart est déterminé en fonction d'une largeur effective de la voie de circulation;
- ledit seuil d'écart est déterminé en fonction d'une largeur utilisable de la voie de circulation, ladite largeur utilisable étant calculée en fonction de la largeur effective, d'une largeur du véhicule automobile, et d'une marge de sécurité ;
- ladite marge de sécurité varie en fonction de la vitesse et/ou de l'accélération du véhicule automobile ;
- lorsque les deux conditions sont réunies, ladite consigne de pilotage est déterminée pour que le véhicule automobile suive la ligne latérale pendant une durée déterminée, puis ladite consigne de pilotage est déterminée pour que le véhicule automobile revienne vers la ligne médiane ;
- ladite durée déterminée présente une valeur de référence de plusieurs secondes ;
- ladite durée déterminée présente une valeur modifiable par le conducteur au moyen d'une interface embarquée dans le véhicule automobile ;
- lorsque les deux conditions ne sont pas réunies, ladite consigne de pilotage est déterminée pour que le véhicule automobile suive la ligne médiane ;
- il est prévu une étape d'acquisition de valeurs de paramètres relatifs à la dynamique du véhicule automobile et à sa position dans ladite voie de circulation, l'un desdits paramètres étant l'écart latéral, puis la consigne de pilotage est calculée au moyen d'un contrôleur, en fonction des valeurs acquises et de valeurs de référence desdits paramètres, la valeur de référence de l'écart latéral étant choisie nulle pour que le véhicule automobile suive la ligne médiane, ou non nulle pour que le véhicule automobile suive la ligne latérale.

L'invention concerne également un véhicule automobile comportant :

- des moyens d'acquisition adaptés à acquérir, lorsque le véhicule automobile évolue sur une voie de circulation, des données relatives à des lignes de bord de ladite voie de circulation,
- un actionneur de direction adapté à piloter le véhicule automobile, et
- un calculateur programmé pour mettre en oeuvre un procédé de pilotage tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

## Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :

[Fig.1] est une vue schématique en perspective d'un véhicule automobile adapté à mettre en oeuvre un procédé conforme à l'invention ;

[Fig.2] est une vue schématique de dessus du véhicule automobile de la [Fig.1] roulant sur une route ;

[Fig.3] représente un schéma fonctionnel des calculs de mise en oeuvre d'un procédé de pilotage selon l'invention ;

[Fig.4] est une vue schématique de dessus d'une voie de circulation de la route de la [Fig.2] ;

[Fig.5] est un schéma illustrant des étapes de mise en oeuvre du procédé de pilotage selon l'invention ;

[Fig.6] représente trois graphiques illustrant les variations dans le temps de paramètres utilisés dans le cadre du procédé de la [Fig.5], dans une première configuration ;

[Fig.7] représente trois graphiques illustrant les variations dans le temps de paramètres utilisés dans le cadre du procédé de la [Fig.5], dans une seconde configuration.

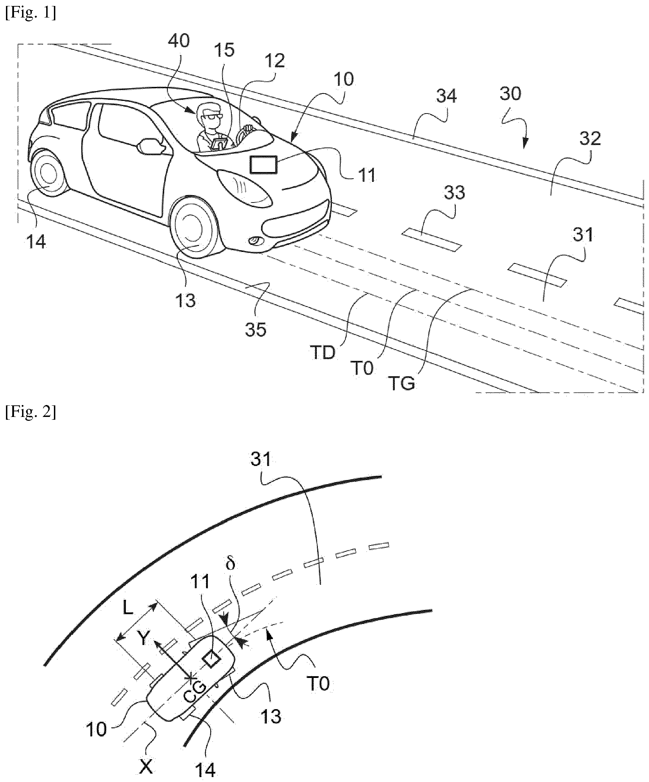

Sur la [Fig.1], on a représenté un véhicule automobile 10 adapté à mettre en oeuvre l'invention.

Il s'agit ici d'une voiture. En variante, il pourrait s'agir d'un autre type de véhicule (camion, moto...).

Sur cette figure, le véhicule automobile 10 roule sur une voie de circulation 31 d'une route 30. On observe que la route 30 présente deux lignes de marquage latérales 34, 35 (qui la délimitent) et une ligne de marquage centrale 33 délimitant deux voies de circulation 31, 32.

Une voie de circulation est ici définie comme la partie d'une route sur laquelle un seul véhicule uniquement est autorisé à circuler à la fois. Une telle voie de circulation est généralement délimitée entre des lignes de marquage.

Une route (ou chaussée) est quant à elle définie comme un ensemble de voies de circulation. Dans l'exemple ici considéré à titre illustratif, cette route 30 comporte donc deux voies de circulation 31 sur lesquelles les véhicules peuvent circuler dans le même sens.

On définira la ligne médiane T0 de la voie de circulation comme étant la courbe géométrique s'étendant le long du centre de la voie de circulation 31, à 'égale distance des deux lignes de marquage latérales 34, 35.

Comme le montre la [Fig.1], le véhicule automobile 10 comporte classiquement un châssis, des roues avant 13 directrices et arrière 14 non directrices, un habitacle dans lequel se trouve notamment un siège pour le conducteur 40 du véhicule.

L'habitacle loge également une interface permettant au conducteur de commander le véhicule de façon à ce qu'il tourne d'un côté ou de l'autre. Typiquement, cette interface pourra être un volant, mais en variante, un joystick pourrait être utilisé.

Ce véhicule automobile 10 comporte classiquement un groupe motopropulseur, un système de freinage et un système de direction permettant de faire tourner le véhicule. Classiquement, le système de direction comporte un actionneur de direction assistée pilotable électroniquement, le groupe motopropulseur comporte un actionneur de commande de moteur pilotable électroniquement, et le système de freinage comporte un actionneur de freinage pilotable électroniquement.

Le véhicule automobile 10 comporte par ailleurs une unité électronique et/ou informatique de traitement (ci-après appelée calculateur 11) comprenant au moins un microprocesseur, au moins une mémoire et des interfaces d'entrée et de sortie.

Grâce à ses interfaces d'entrée, le calculateur 11 est adapté à recevoir différentes données d'entrée qui proviennent de capteurs ou de calculateurs tiers.

Parmi ces capteurs, il est par exemple prévu une caméra frontale permettant de repérer les bords de la voie de circulation 31 empruntée. Il est également prévu des capteurs adaptés à déterminer les valeurs d'autres paramètres mentionnés plus loin, relatifs à la position du véhicule dans sa voie de circulation, à la voie de circulation et à la dynamique du véhicule.

Grâce à ses interfaces de sortie, le calculateur est adapté à commander l'actionneur de direction assistée, l'actionneur de commande de moteur, et l'actionneur de freinage.

Grâce à ces interfaces, le calculateur peut également communiquer avec un écran tactile 15 afin d'y afficher des données ou de permettre au conducteur 40 du véhicule d'y saisir des informations.

Grâce à sa mémoire, le calculateur mémorise une application informatique, constituée de programmes d'ordinateur comprenant des instructions dont l'exécution par le calculateur permet la mise en oeuvre d'une fonction de maintien automatique du véhicule dans sa voie de circulation (appelée ci-après fonction LCA), et plus généralement du procédé décrit ci-après.

Avant de décrire plus en détail ce procédé, on peut introduire les différentes variables qui seront utilisées, dont certaines sont illustrées sur la [Fig.2].

La masse totale du véhicule automobile sera notée « m » et sera exprimée en kg.

Le centre de gravité du véhicule sera noté « CG ».

La masse du véhicule qui s'exerce sur le train de roues avant sera noté « $M_f$ » est sera exprimée en kg.

La masse du véhicule qui s'exerce sur le train de roues arrière sera noté « $M_r$ » est sera exprimée en kg.

L'empattement du véhicule, c'est-à-dire la distance entre les axes de ces deux trains de roue, sera noté « L » et s'exprimera en mètres.

La rigidité pneumatique des roues arrière sera noté $C_r$ et s'exprimera en Newton/rad.

La rigidité pneumatique des roues avant sera noté $C_f$ et s'exprimera en Newton/rad.

On pourra considérer un repère orthogonal (CG, X, Y, Z) attaché au véhicule. Son origine est confondue avec le centre de gravité CG. L'axe X correspond à l'axe longitudinal du véhicule. L'axe Y correspond à l'axe latéral tourné vers la gauche du véhicule. Lorsque le véhicule roule sur une route horizontale, l'axe Z correspond à l'axe vertical. Plus généralement, cet axe Z est l'axe normal à la route.

L'angle de braquage que font les roues avant directrices avec l'axe longitudinal X du véhicule automobile 10 sera noté « δ » et sera exprimé en rad.

On notera que l'angle au volant de direction et l'angle de braquage δ sont directement liés, avec un rapport de démultiplication voire également une dynamique du premier ou deuxième ordre. On considère alors dans la suite uniquement l'angle de braquage δ aux roues.

La vitesse de braquage des roues avant sera notée « dδ/dt ».

La vitesse longitudinale du véhicule, selon l'axe X, sera notée v et sera exprimée en m/s.

L'angle relatif de cap entre l'axe X et la tangente à la ligne médiane T0 au niveau du centre de gravité CG sera noté « Ψ » et sera exprimé en rad.

La vitesse de lacet du véhicule 1, c'est-à-dire sa vitesse de rotation autour de l'axe Z, sera notée « dψ/dt ».

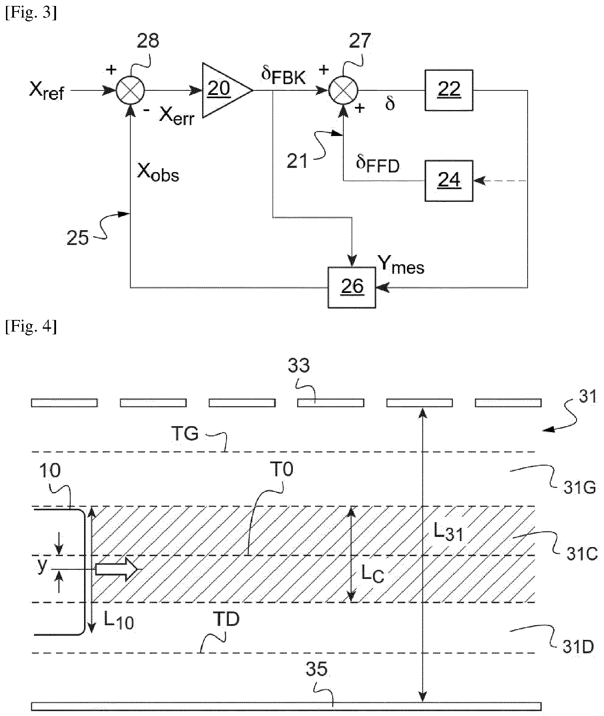

L'erreur de position latérale, également appelée écart latéral, entre le centre de gravité CG du véhicule et la ligne médiane T0 sera notée y (voir [Fig.4]).

La vitesse latérale du véhicule sera notée « dy/dt ».

A ce stade, on pourra aussi introduire une notion « d'intégrale d'erreur de position », qui correspond à l'intégrale temporelle des écarts latéraux y par rapport à la ligne médiane T0. Cette intégrale d'erreur sera notée « ʃ-y.dt ».

La courbure de la ligne médiane est notée ρ (en m '). Il s'agit de l'inverse de son rayon de courbure au niveau du centre de gravité CG du véhicule automobile 10.

Le procédé de pilotage du véhicule automobile 10 est prévu pour permettre à ce véhicule de suivre la ligne médiane T0 de la voie de circulation, en mode autonome (sans intervention du conducteur).

Ce procédé est mis en oeuvre lorsque la fonction LCA est activée.

La manière d'activer cette fonction ne sera pas ici décrite.

On pourra en revanche décrire comment le véhicule est maintenu dans sa voie de circulation 31 lorsque la fonction LCA est activée.

Pour établir la loi de commande du véhicule et ainsi réguler l'angle de braquage δ du véhicule automobile 10 afin que ce dernier reste centré sur sa ligne médiane T0, on a modélisé ce véhicule au travers d'un modèle bicyclette.

Dans un tel modèle, les deux roues de l'essieu avant sont considérées comme étant confondues, et il en va de même des deux roues arrière. Le châssis du véhicule est quant à lui modélisé par un corps qui relie les deux modèles de roues.

La dynamique du véhicule automobile 10 est alors représentée par un vecteur d'état X, qui s'exprime ici sous la forme :

[Math.1]

$$X = \begin{pmatrix} d\psi/dt \\ \psi \\ dy/dt \\ y \\ d\delta/dt \\ \delta \\ \int -ydt \end{pmatrix}$$

On rappellera ici que l'écart latéral y correspond à la distance entre le centre de gravité CG du véhicule et la ligne médiane T0.

L'équation de cette ligne médiane est en pratique déterminée sur la base des équations représentatives des lignes de marquage 33, 35 qui délimitent cette voie de circulation 31.

D'après le modèle « bicyclette » utilisé, l'équation du système s'écrit sous la forme suivante :

[Math.2]

$$\begin{cases} \dot{X} = A.X + B_\delta \delta_{FBK} + B_\rho.\rho \\ Y = C.X \end{cases}$$

Dans cette équation, le terme $\delta_{FBK}$ est une première composante de la consigne d'angle de braquage $\delta$ qui sera transmise à l'actionneur de direction assistée. Comme cela apparaîtra plus clairement ci-après, cette composante permet de maintenir le véhicule au centre de la voie de circulation 31 en considérant que cette dernière est rectiligne.

A, C, $B_\delta$ et $B_\rho$ sont des matrices et vecteurs déterminés.

La première des équations Math2 introduit alors deux termes, dont un terme de boucle ouverte $B_\rho.\rho$ et un terme de boucle fermé $B_\delta.\delta_{FBK}$. Le terme de boucle ouverte est prévu pour compenser l'angle de braquage $\delta$ en tenant compte de la courbure de la ligne médiane T0. Le terme en boucle fermé permet de calculer l'angle de braquage en considérant que la voie de circulation est rectiligne.

Y représente le vecteur de mesure, et il dépend donc de l'état X.

En référence à la [Fig.3], on a schématiquement représenté par un schéma-bloc la topologie d'un exemple de système LCA.

Ce schéma-bloc comporte une boucle fermée 25 et une boucle ouverte 21.

La boucle ouverte 21 a pour fonction de prendre en compte la courbure de la route et de compenser l'effet du virage sur les états et la commande.

La boucle fermée 25 a pour fonction de maintenir le véhicule au centre de sa voie de circulation alors que cette dernière est considérée droite, c'est-à-dire rectiligne.

On retrouve donc bien les deux termes introduits ci-dessus.

Les termes issus de ces deux boucles, à savoir les composantes $\delta_{FBK}$ et $\delta_{FFD}$, s'additionnent au moyen d'un sommateur 27.

L'angle de braquage $\delta$ à transmettre à la roue avant pour que le véhicule 1 se déplace dans un virage présentant une courbure $\rho$ connue dépend ainsi des deux composantes précédentes, si bien qu'on peut écrire :

[Math.3]

$$\delta_{req} = \delta_{FBK} + \delta_{FFD}$$

Sur la [Fig.3], l'état du véhicule 1 est représenté par l'élément 22. Cet élément représente donc le véhicule, avec ses capteurs, ses actionneurs... Il ressort de cet élément 22 un ensemble de données mesurées.

La boucle ouverte 21 comprend un élément anticipateur 24. Cet élément anticipateur 24 prend en compte la courbure $\rho$ de la voie de circulation (calculée par exemple à partir des images obtenues par la caméra) afin d'évaluer la composante $\delta_{FFD}$ de l'angle de braquage $\delta$. Cette boucle ouverte est généralement connue sous la dénomination anglo-saxonne « feed forward ».

En considérant le modèle bicyclette en régime permanent (avec dX/dt = 0), et en supposant le véhicule au centre de sa voie (dy/dt = 0 et y=0) et en virage établi (d$\delta$/dt=0), on peut alors écrire :

[Math.4]

$$\delta_{FFD} = \rho \left( L + \nabla_{SV} v^2 \right)$$

Dans cette équation, $\nabla_{SV}$ est le gradient de sous-virage propre au véhicule, lequel est classiquement défini par l'expression suivante :

[Math.5]

$$\nabla_{SV} = \frac{M_f}{C_f} - \frac{M_r}{C_r}$$

En d'autres termes, la composante $\delta_{FFD}$ de l'angle de braquage $\delta$ présente un terme $\rho$L qui est déterminé en fonction de la courbure du virage et de l'architecture du véhicule, et un terme qui permet de prendre en compte la dérive du véhicule en virage.

La boucle fermée 25 comprend un élément observateur 26 qui permet d'observer l'état $X_{obs}$ du véhicule automobile 10.

Elle comporte également un comparateur 28 permettant de faire la différence entre un état de référence $X_{ref}$ et cet état observé $X_{obs}$. Cette différence forme une erreur $X_{err}$.

Elle comporte enfin un contrôleur 20 qui recueille le signal délivré par le comparateur 28 et génère la composante $\delta_{FBK}$ de l'angle de braquage $\delta$.

Ce contrôleur 20 comporte en pratique un gain Ks se présentant sous la forme d'un vecteur qui, une fois multiplié par l'erreur $X_{err}$, permet de calculer la composante $\delta_{FBK}$.

L'observateur d'état 26 recueille un vecteur de mesure $Y_{mes}$ (comprenant des valeurs mesurées, telles que notamment l'angle de braquage) et délivre l'état observé $X_{obs}$.

La représentation d'état mise en oeuvre par l'observateur d'état 26 est basée sur le modèle bicyclette du véhicule.

Cet observateur d'état 26 est utilisé pour estimer les valeurs non mesurées des paramètres du modèle. Ces valeurs non mesurées sont par exemple dy/dt et d$\delta$/dt.

On notera ici qu'en variante, on pourrait se passer de cet observateur si toutes les valeurs étaient mesurées.

En notant $\hat{X}$ l'estimation du vecteur d'état X, l'équation de l'observateur peut être écrite comme :

[Math.6]
$$\dot{\hat{X}} = (A\text{-}L_P C)\hat{X} + B_\delta \delta_{FBK} + L_P Y$$

avec $L_P$ une valeur de gain associée à l'élément observateur 26.

En règle générale, la commande mise en oeuvre par la boucle fermée 25 vise à minimiser le vecteur d'état X autour d'un état de référence $X_{ref}$ nul correspondant à une ligne droite. En d'autres termes, les valeurs de référence nominales (dans des conditions de conduite nominale) sont telles qu'on peut écrire :

[Math.7]
$$X_{ref} = \begin{vmatrix} d\psi_{ref}/dt \\ \psi_{ref} \\ dy_{ref}/dt \\ y_{ref} \\ d\delta_{ref}/dt \\ \delta_{ref} \\ \int -y_{ref}dt \end{vmatrix} = \begin{bmatrix} 0 \\ 0 \\ 0 \\ 0 \\ 0 \\ 0 \\ 0 \end{bmatrix}$$

En résumé, lorsque la fonction LCA est activée et qu'elle fonctionne en régime nominal (sans action du conducteur sur le volant 12), il est prévu de mesurer les variables du vecteur de mesure $Y_{mes}$ et la courbure $\rho$ de la voie de circulation.

Cette courbure permet de calculer la composante $\delta_{FFD}$.

Les variables mesurées permettent, grâce à l'observateur d'état 26, de déterminer les valeurs $X_{obs,i}$ des paramètres du vecteur d'état X (également appelées variables d'état et notées : $\psi$, d$\psi$/dt, y, dy/dt, $\delta$, d$\delta$/dt, $\int$-y.dt).

Le vecteur $X_{err}$ faisant la différence entre ces valeurs observées $X_{obs,i}$ et les valeurs de référence $X_{ref,i}$ nominales correspondantes permet ensuite de déterminer la composante $\delta_{FBK}$, et donc d'en déduire la consigne d'angle de braquage $\delta$.

Il peut toutefois arriver que le conducteur souhaite décaler temporairement le véhicule d'un côté ou de l'autre de la voie de circulation 31, tout en restant dans cette dernière, afin de se rapprocher des lignes de marquage 33, 35 délimitant cette voie.

C'est typiquement le cas lorsqu'une moto double les véhicules empruntant la route 31 en passant entre deux voies de circulation. D'autres situations peuvent aussi amener le conducteur à décaler son véhicule vers la droite ou la gauche (pour doubler un cycliste, pour laisser passer un véhicule très large circulant en sens opposé...).

Dans ces situations, le conducteur 40 exerce une action pour modifier la trajectoire du véhicule. Cette action consiste ici à appliquer sur le volant 12 un couple modéré, dans la direction souhaitée. On notera que ce couple est inférieur à un seuil de couple au-delà duquel on considère que le conducteur 40 souhaite reprendre en main la conduite du véhicule automobile 10 (si bien que le calculateur désactive la fonction LCA).

Lorsqu'il applique ce couple modéré, le conducteur décale donc le véhicule automobile 10 de la ligne médiane T0.

L'invention propose alors une solution permettant au véhicule, lorsque le conducteur cesse son action sur le volant, de continuer à suivre une trajectoire décalée par rapport à la ligne médiane T0.

Pour cela, dans cette situation, les valeurs de référence sont modifiées si bien qu'on peut écrire :

[Math.8]

$$X_{ref} = \begin{pmatrix} d\psi_{ref}/dt \\ \psi_{ref} \\ dy_{ref}/dt \\ y_{ref} \\ d\delta_{ref}/dt \\ \delta_{ref} \\ \int -y_{ref} dt \end{pmatrix} = \begin{bmatrix} 0 \\ 0 \\ 0 \\ y_{ref} \\ 0 \\ 0 \\ 0 \end{bmatrix}, \ avec \ y_{ref} \neq 0$$

L'idée consiste alors à ajuster la valeur de référence de l'écart latéral $y_{ref}$ à une valeur non nulle mais qui garantisse la sécurité du véhicule et l'agrément du conducteur.

Le véhicule sera donc piloté de façon à conserver un écart latéral non nul avec la ligne médiane T0 pendant plusieurs secondes au moins.

En pratique, le véhicule sera piloté ainsi uniquement si le conducteur a suffisamment dévié son véhicule de la ligne médiane T0, pendant plusieurs secondes. En effet, une légère déviation ne doit pas ici être interprétée comme une volonté du conducteur de décaler dans la durée le véhicule de la ligne médiane T0.

L'écart latéral y entre le véhicule et la ligne médiane T0 est donc déterminée au moment où le conducteur cesse d'exercer un couple sur le volant 12, puis est comparée à un seuil.

Pour comprendre comment ce seuil est construit, on a représenté sur la [Fig.4] la voie de circulation 31 empruntée par le véhicule automobile 10.

Cette voie de circulation 31 est divisée en trois bandes, dont :

- une bande centrale 31C sur laquelle le véhicule automobile 10 roule en régime nominal (avec $y_{ref} = 0$),
- une bande latérale gauche 31G, et
- une bande latérale droite 31D.

Les termes droite et gauche sont ici définis compte tenu du sens de circulation du véhicule automobile 10.

La bande centrale 31C est centrée sur la voie de circulation et présente la même largeur de part et d'autre de la ligne médiane T0. Ainsi, la largeur Le de la bande centrale permettra de caractériser les largeurs des autres bandes.

En pratique, les trois bandes 31C, 31D, 31G ne s'étendront pas sur la largeur totale $L_{31}$ de la voie de circulation 31, mais plutôt sur une « largeur utilisable $L_{31}'$ » moindre afin de tenir compte de la largeur du véhicule et d'une marge de sécurité.

Cette largeur utilisable $L_{31}'$ pourra être calculé à l'aide de l'équation suivante :

[Math.9]

$$L_{31}' = L_{31} - L_{10} - 2.Ms$$

Dans cette équation, la variable $L_{31}$ correspond à la largeur effective de la voie de circulation 31 au niveau du véhicule automobile 10, la variable $L_{10}$ correspond à la largeur du véhicule automobile 10, et le terme Ms correspond à la marge de sécurité que l'on souhaite préserver de part et d'autre du véhicule automobile 10.

Cette marge de sécurité Ms pourrait être une constante prédéfinie. Toutefois, de manière préférentielle, il s'agira d'une variable fonction au moins de la vitesse longitudinale v du véhicule automobile 10, voire aussi de son accélération latérale (selon l'axe Y).

On notera que cette marge de sécurité pourra être modifiée par le conducteur 40, par exemple en utilisant un menu affichable sur l'écran tactile 15.

La largeur Le de la bande centrale 31C sera alors définie comme un pourcentage prédéfini de cette largeur utilisable $L_{31}'$.

Dès lors, lorsque le conducteur exercera sur le volant 12 une action telle que le véhicule se décale de la ligne médiane T0 tout en restant dans cette bande centrale 31C puis qu'il cessera cette action, le calculateur sera programmé pour ramener le véhicule automobile 10 le long de la ligne médiane T0.

En revanche, lorsque le conducteur exercera sur le volant 12 une action telle que le véhicule se décale de la ligne médiane T0 en allant dans l'une des bandes latérales 31G, 31D pendant une durée importante puis qu'il cessera cette action, le calculateur sera programmé pour ramener le véhicule automobile 10 le long d'une ligne décalée TD, TG, écartée latéralement de la ligne médiane T0 (selon l'axe Y).

La ligne décalée TG, TD sera située dans la bande latérale 31G, 31D dans laquelle le véhicule automobile 10 aura été dévié par le conducteur 40. Elle pourra être située au centre de celle-ci, ou plus vers la ligne médiane T0.

De manière préférentielle, cette ligne décalée TG, TD aura toujours la même position dans la voie de circulation. Typiquement, les deux lignes décalées pourront être situées au quart et au trois-quarts de la largeur utilisable $L_{31}'$ de la voie de circulation 31. Ainsi, le conducteur pourra s'habituer à cette position, ce qui lui donnera un sentiment de confiance dans la fonction.

On peut maintenant décrire le procédé, tel qu'il pourra être mis en oeuvre par le calculateur 11 du véhicule automobile lorsque la fonction LCA est activée.

Ce procédé est mis en oeuvre en boucles, avec un pas d'échantillonnage constant de l'ordre du dixième de seconde par exemple.

Comme cela a été expliqué supra, ce procédé consiste, lorsque le conducteur 40 exerce une action sur le volant 12 pour décaler le véhicule de la ligne médiane T0 (tout en restant dans la voie de circulation) puis qu'il cesse cette action, à piloter le véhicule de manière qu'il suive une ligne décalée TD, TG si deux conditions sont réunies, ou sinon à ramener le véhicule vers la ligne médiane T0.

La première condition est que le véhicule se trouve suffisamment décalé par rapport à la ligne médiane à la fin de l'action exercée par le conducteur 40 (si le décalage effectué par le conducteur était faible, le véhicule revient directement au centre de la voie de circulation). La seconde condition est que le conducteur ait décalé le véhicule de la ligne médiane pendant une durée importante (typiquement de plusieurs secondes). Ainsi, si ce décalage était momentané, le véhicule revient directement au centre de la voie de circulation.

Les différentes étapes détaillées de mise en oeuvre de ce procédé sont les suivantes.

Au cours d'une étape préliminaire, la caméra acquiert une image de l'environnement à l'avant du véhicule automobile 10.

Sur la base de cette image, le calculateur (ou un calculateur embarqué dans la caméra) détermine, par reconnaissance d'images, les équations des deux lignes de marquage 33, 35 qui délimitent la voie de circulation 31. En l'absence de telles lignes de marquage, la caméra pourrait être adaptée à déterminer les positions des bords de la voie de circulation (barrière, bord de la chaussée...).

Le calculateur peut alors en déduire simplement l'équation de la ligne médiane T0.

En parallèle, le calculateur acquiert une donnée permettant de déterminer si le conducteur exerce une action visant à décaler le véhicule de la ligne médiane T0. En l'espèce, il acquiert ici le couple exercé par le conducteur 40 sur le volant 12.

De façon plus générale, le calculateur déterminera si une action est entreprise ou non par le conducteur, via un capteur de couple, un capteur de pression sur le volant ou tout autre capteur utilisable.

Tant qu'aucune action n'est entreprise (couple au volant nul), le calculateur pilote l'actionneur de direction assistée de telle manière que le véhicule suive cette ligne médiane T0. Comme cela a été précisé supra, il utilise pour cela les valeurs de référence nominales de l'équation Math.7.

En revanche, dès qu'une action est entreprise, le calculateur active une sous-fonction de la fonction LCA, appelée fonction TMD (de l'anglais « Trajectory Modulation by Driver », c'est-à-dire modulation de trajectoire par le conducteur).

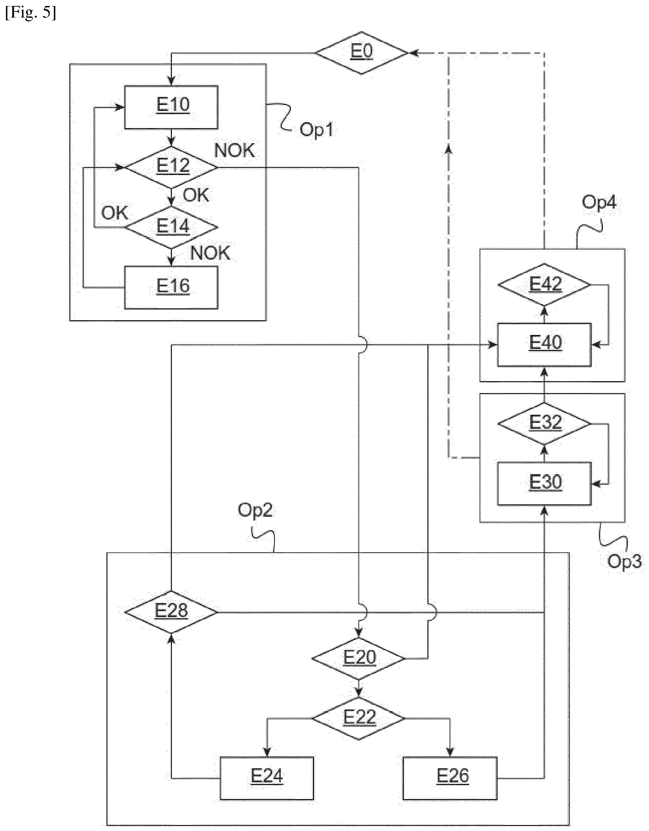

Sur la [Fig.5], on a représenté plus en détail les étapes de mise en oeuvre de cette fonction TMD.

La première étape E0 consiste à vérifier si la fonction TMD est activée.

Lorsque c'est le cas, c'est-à-dire lorsqu'une action est entreprise par le conducteur 40, le calculateur met en oeuvre une première opération Op1 qui vise à déterminer combien de temps le véhicule automobile 10 passe dans la bande 31D, 31C, 31G de la voie de circulation (celle empruntée au moment où l'action entreprise prend fin).

En d'autres termes, cette opération vise à quantifier, lorsque le conducteur 40 exerce un couple sur le volant, le temps pendant lequel le véhicule automobile 10 reste dans l'une des trois bandes 31D, 31C, 31G.

En pratique, cette opération comprend une première étape E10 qui consiste à mettre un compteur TC à zéro puis à le déclencher. Ce compteur TC restera activé tant que l'action entreprise n'aura pas pris fin et que le véhicule automobile 10 restera dans la même bande 31D, 31C, 31G de la voie de circulation 31 sans en changer.

Pour cela, au cours d'une seconde étape E12, le calculateur détermine si l'action entreprise est encore en cours (couple au volant non nul).

Si tel est le cas, au cours d'une troisième étape E14, le calculateur détermine si le véhicule automobile 10 change de bande 31D, 31C, 31G. Si c'est le cas, le processus revient à l'étape E10 pour une remise à zéro du compteur. Si ce n'est pas le cas, le processus se poursuit en une étape E16 d'incrémentation du compteur TC, puis le processus recommence, au pas de temps suivant, à l'étape E12.

On notera que lorsqu'au cours de l'étape E12, le calculateur détecte que l'action entreprise a pris fin (couple au volant nul), une seconde opération Op2 s'engage.

Cette seconde opération Op2 consiste à déterminer si le véhicule doit être piloté selon la ligne médiane T0 ou selon l'une des lignes décalées TD, TG. Elle est mise en oeuvre en plusieurs étapes.

Au cours d'une première étape E20, le calculateur détermine sur quelle bande le véhicule se trouve (au moment où l'action entreprise a pris fin).

S'il se trouve sur la bande centrale 31C, le pilotage en mode nominal selon la ligne médiane T0 peut être repris. Dans cette éventualité, une quatrième opération Op4 décrite ci-après peut alors être mise en oeuvre.

En revanche, s'il se trouve sur l'une des bandes latérales 31G, 31D, le calculateur vérifie, au cours d'une seconde étape E22, si le compteur TC dépasse un seuil de temps prédéterminé $S_{TC}$. Ce seuil est supérieur à la seconde. Il est par exemple de 3 secondes.

Si tel est le cas, le décalage automatique est validé (étape E26) et le processus se poursuit au cours d'une troisième opération Op3 décrite ci-après.

Dans le cas contraire, le décalage automatique n'est pas validé (étape E24), notamment parce que le véhicule n'est pas resté suffisamment longtemps décentré, ce qui est interprété comme une volonté de la part du conducteur de rester sur la même trajectoire qu'il avait avant l'instant où l'action a été entreprise. Le processus se poursuit alors en une étape E28 qui consiste à déterminer si, avant d'entreprendre cette action, le véhicule était décalé ou non de la ligne médiane T0.

Si, avant que l'action ne soit entreprise, le véhicule suivait la ligne médiane T0, la quatrième opération Op4 décrite ci-après peut alors être directement mise en oeuvre de façon à ramener progressivement le véhicule automobile sur cette ligne médiane T0.

Dans le cas contraire, le processus se poursuit avec la troisième opération Op3 pour ramener le véhicule sur la ligne décalée TD, TG qu'il suivait avant que l'action ne soit entreprise.

La troisième opération vise à permettre au véhicule de suivre la ligne décalée TD, TG pendant une durée déterminée.

Lors de cette troisième opération, le calculateur 11 applique une valeur de référence de l'écart latéral $y_{ref}$ non nulle, selon la formule Math.8, de manière à maintenir le véhicule automobile 10 le long de la ligne décalée TD, TG choisie.

En parallèle, au cours d'une première étape E30, le calculateur 11 met à zéro un autre compteur TC1 et l'incrémente à chaque nouveau pas de temps. Au cours d'une seconde étape E32, il vérifie si ce compteur TC1 dépasse un seuil de temps prédéterminé. Tant que ce n'est pas le cas, le décalage latéral est maintenu. En revanche, lorsque le compteur TC1 atteint ce seuil de temps, le décalage du véhicule est prévu pour s'annuler progressivement de manière automatique.

Bien entendu, en variante, le décalage latéral pourrait être maintenu tant que le conducteur n'en émet pas le souhait (par exemple en contre-braquant le volant 12). Mais ici, il est estimé qu'il est plus sécurisant de ramener le véhicule au centre de sa voie dans un délai de quelques secondes.

Le seuil de temps pourrait être prédéterminé (par exemple être égal à 10 secondes). Il pourrait en variante être choisi en fonction de différents paramètres (type de voie, vitesse du véhicule, présence de motos à proximité, présence d'obstacles...).

On notera ici que le délai de base de 10 secondes pourra être modifié par le conducteur 40 dans un menu affichable sur l'écran tactile 15.

La quatrième opération Op4 consiste, lorsque le délai de 10 secondes est dépassé (ou lorsqu'après la seconde opération Op2, le calculateur considère que le véhicule doit revenir sur la ligne médiane T0), à réduire progressivement l'écart latéral y entre le centre de gravité CG du véhicule automobile 10 et la ligne médiane T0.

Pour cela, on pourrait directement appliquer une valeur de référence de l'écart latéral $y_{ref}$ nulle, selon la formule Math.7.

Toutefois, ici, pour que la trajectoire du véhicule soit plus douce, il est choisi de réduire progressivement la valeur de référence $y_{ref}$ utilisée dans la formule Math.8. Cette valeur est ici réduite selon une fonction affine de pente soit prédéterminée, soit réglable par le conducteur sur un menu affichable sur l'écran tactile 15, soit en fonction du mode de conduite utilisé (sport, normal, éco...).

Ainsi, à chaque pas de temps, le calculateur 11 réduit au cours de l'étape E40 la valeur de référence $y_{ref}$ puis détermine au cours de l'étape E42 si cette valeur a atteint la valeur nulle. Tant que ce n'est pas le cas, ces deux étapes se répètent.

Lorsque c'est le cas, le processus s'achève.

Bien entendu, si au cours des opérations Op3 ou Op4, le conducteur entreprenait une nouvelle action, le processus s'interromprait et reprendrait à l'étape E0.

On peut maintenant décrire plusieurs exemples de mise en oeuvre du procédé décrit supra.

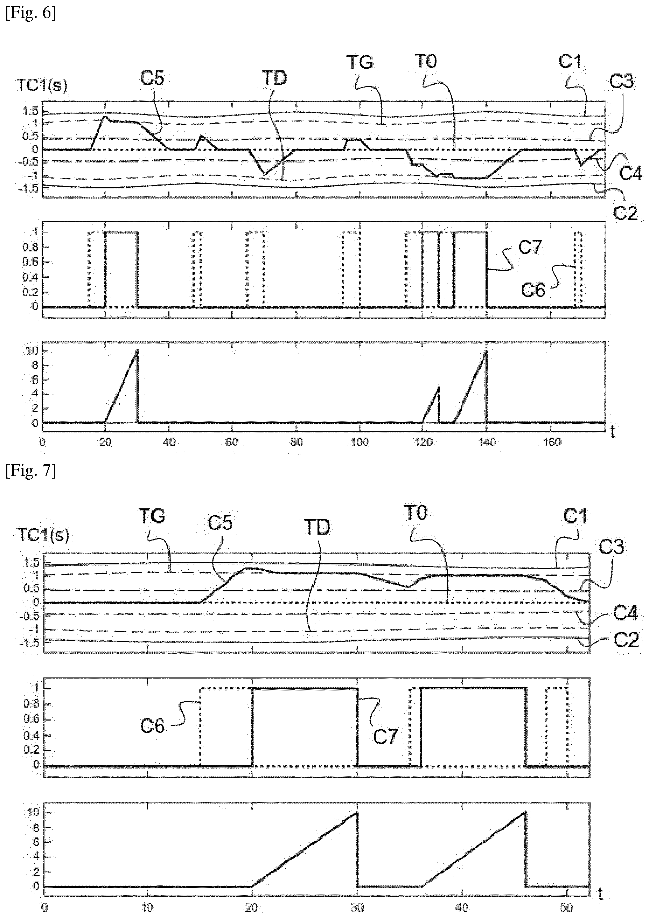

Les figures 6 et 7 portent sur deux exemples distincts.

Sur ces deux figures, le graphique du dessus représente, vue du dessus, la voie de circulation 31 avec les courbes :

- C1 et C2 qui représentent les bords de la voie de circulation,
- C3 et C4 qui représentent les bords de la bande centrale 31C,
- T0 qui représente la ligne médiane,
- TD et TG qui représentent les lignes décalées, et
- C5 qui représente la trajectoire du véhicule automobile 10.

Le graphique du dessous représente la valeur de la temporisation TC1.

Le graphique du milieu représente, par la courbe C6, la valeur d'une variable booléenne qui est égale à 0 lorsqu'aucune action n'est entreprise par le conducteur et la valeur 1 sinon. La courbe C8 représente une autre variable booléenne qui est égale à 1 lorsque la temporisation TC1 est non-nulle et qui est égale à 0 sinon.

Sur la [Fig.6], on peut observer les situations suivantes.

Lorsque le temps t est égal à 95s, le conducteur a exercé une action qui n'a pas fait sortir le véhicule de la bande centrale 31C, si bien que lorsque l'action entreprise par le conducteur prend fin, le véhicule est immédiatement ramené par le calculateur 11 vers la ligne médiane T0.

Lorsque le temps t est égal à 15s, le conducteur a exercé une action qui a fait sortir le véhicule de la bande centrale 31C vers la gauche pendant une durée de plus de 3 secondes, si bien que lorsque l'action entreprise par le conducteur prend fin, le véhicule est ramené par le calculateur 11 vers la ligne décalée TG. Le véhicule reste centré sur cette ligne pendant 10 secondes fpuis est ensuite ramené par le calculateur 11 vers la ligne médiane T0 (avec une progression affine).

On observera ici qu'en variante, on pourrait ne pas avoir de temporisation de 10 secondes, si bien que le véhicule resterait sur la ligne décalée TG jusqu'à ce que le conducteur entreprenne une nouvelle action pour ramener le véhicule dans la bande centrale 31C.

Lorsque le temps t est égal à 65s, le conducteur a exercé une action qui a fait sortir le véhicule de la bande centrale 31C vers la droite pendant une durée de moins de 3 secondes, si bien que lorsque l'action entreprise par le conducteur prend fin, le véhicule est ramené par le calculateur 11 vers la ligne médiane T0.

Lorsque le temps t est égal à 110s, le conducteur a exercé une action qui a fait sortir le véhicule de la bande centrale 31C vers la droite pendant une durée de plus de 3 secondes, si bien que lorsque l'action entreprise par le conducteur prend fin, le véhicule est ramené par le calculateur 11 vers la ligne décalée TD. Le compteur TC1 s'incrémente alors mais, avant qu'il n'atteigne 10 secondes, une nouvelle action est entreprise par le conducteur 40. Dès lors, le compteur TC1 est remis à zéro. Cette nouvelle action n'ayant pas pour but de faire changer le véhicule de bande 31D, lorsqu'elle prend fin, le véhicule est immédiatement ramené par le calculateur 11 vers la ligne décalée TD.

Sur la [Fig.7], on peut observer la situation suivante.

Lorsque le temps t est égal à 15s, le conducteur a exercé une action qui a fait sortir le véhicule de la bande centrale 31C vers la gauche pendant une durée de plus de 3 secondes, si bien que lorsque l'action entreprise par le conducteur prend fin, le véhicule est ramené par le calculateur 11 vers la ligne décalée TG. Le véhicule reste centré sur cette ligne pendant 10 secondes puis est ensuite ramené par le calculateur 11 vers la ligne médiane T0 (avec une progression affine).

Lors de ce retour, on observe qu'à l'instant t égal à 35s, le conducteur exerce à nouveau une action pour ramener le véhicule vers la ligne décalée TG dont il avait commencé à s'écarter. Dès lors, lorsque l'action entreprise par le conducteur prend fin, le véhicule est ramené par le calculateur 11 vers cette ligne décalée TG. Le véhicule reste centré sur cette ligne pendant 10 secondes puis est ensuite à nouveau ramené par le calculateur 11 vers la ligne médiane T0 (avec une progression affine).

Lors de ce retour, on observe qu'à l'instant t égal à 48s, le conducteur exerce à nouveau une action, cette fois pour ramener le véhicule vers la ligne médiane T0 plus vite que ne le fait le calculateur 11. Dès lors, lorsque l'action entreprise par le conducteur prend fin, le véhicule étant sur la bande centrale 31C, le véhicule est ramené par le calculateur 11 vers cette ligne médiane T0.

La présente invention n'est nullement limitée au mode de réalisation décrit et représenté, mais l'homme du métier saura y apporter toute variante conforme à l'invention.

**Revendications**

1.  Procédé de pilotage d'un véhicule automobile (10) circulant sur une voie de circulation (31) d'une route (30), comprenant des étapes de :

    - acquisition de données relatives à des lignes de bord (33, 35) de ladite voie de circulation (31),
    - détermination d'une ligne médiane (T0) de ladite voie de circulation (31) compte tenue desdites données,
    - acquisition d'un écart latéral (y) entre le véhicule automobile (10) et la ligne médiane (T0),
    - calcul, par un calculateur (11) embarqué dans ledit véhicule automobile (10), d'une consigne de pilotage du véhicule automobile (10) en fonction de ladite ligne médiane (T0), et
    - pilotage par le calculateur (11) d'un actionneur de direction dudit véhicule automobile (10), selon ladite consigne de pilotage,

    **caractérisé en ce que**, lorsque deux conditions sont réunies, à savoir :

    - qu'un conducteur (40) du véhicule automobile (10) exerce sur une interface (12) du véhicule automobile (10) une action pour commander un décalage du véhicule automobile (10) par rapport à ladite ligne médiane (T0) puis qu'il cesse cette action, et
    - que, au moment où il cesse ladite action, l'écart latéral (y) est supérieur à un seuil d'écart,

    ladite consigne de pilotage est déterminée pour que le véhicule automobile (10) suive une ligne latérale (TD, TG) décalée latéralement de la ligne médiane (T0).

2.  Procédé de pilotage selon la revendication 1, dans lequel ladite consigne de pilotage est déterminée pour que le véhicule automobile suive la ligne latérale (TD, TG) uniquement si ledit écart latéral (y) est resté, pendant que le conducteur exerçait ladite action, supérieur audit seuil d'écart pendant une durée supérieure à un seuil de temps.

3.  Procédé de pilotage selon la revendication 2, dans lequel ledit seuil d'écart est déterminé en fonction d'une largeur effective ($L_{31}$) de la voie de circulation (31).

4.  Procédé de pilotage selon la revendication 3, dans lequel ledit seuil d'écart est déterminé en fonction d'une largeur utilisable de la voie de circulation, ladite largeur utilisable étant calculée en fonction de la largeur effective ($L_{31}$), d'une largeur ($L_{10}$) du véhicule automobile (10), et d'une marge de sécurité.

5.  Procédé de pilotage selon la revendication 4, dans lequel ladite marge de sécurité varie en fonction de la vitesse et/ou de l'accélération du véhicule automobile (10).

6.  Procédé de pilotage selon l'une des revendications 1 à 5, dans lequel, lorsque les deux conditions sont réunies, ladite consigne de pilotage est déterminée pour que le véhicule automobile (10) suive la ligne latérale (TG, TD) pendant une durée déterminée, puis ladite consigne de pilotage est déterminée pour que le véhicule automobile (10) revienne vers la ligne médiane (T0).

7.  Procédé de pilotage selon la revendication 6, dans lequel ladite durée déterminée présente une valeur de référence de plusieurs secondes.

8.  Procédé de pilotage selon la revendication 6 ou 7, dans lequel ladite durée déterminée présente une valeur modifiable par le conducteur au moyen d'une interface embarquée dans le véhicule automobile (10).

9. Procédé de pilotage selon l'une des revendications 1 à 8, dans lequel, lorsque les deux conditions ne sont pas réunies, ladite consigne de pilotage est déterminée pour que le véhicule automobile (10) suive la ligne médiane (T0).

10. Procédé de pilotage selon l'une des revendications 1 à 9, dans lequel :

- il est prévu une étape d'acquisition de valeurs ($X_{obs,i}$) de paramètres ($\psi$, $d\psi/dt$, y, dy/dt, $\delta$, $d\delta/dt$, f-y.dt) relatifs à la dynamique du véhicule automobile (10) et à sa position dans ladite voie de circulation (31), l'un desdits paramètres étant l'écart latéral (y),
- la consigne de pilotage est calculée au moyen d'un contrôleur (20), en fonction des valeurs ($X_{obs,i}$) acquises et de valeurs de référence ($X_{ref,i}$) desdits paramètres ($\psi$, $d\psi/dt$, y, dy/dt, $\delta$, $d\delta/dt$, f-y.dt), la valeur de référence de l'écart latéral (y) étant choisie :

  ¤ nulle pour que le véhicule automobile (10) suive la ligne médiane (T0), ou
  ¤ non nulle pour que le véhicule automobile (10) suive la ligne latérale (TG, TD).

11. Véhicule automobile (10) comportant :

- des moyens d'acquisition adaptés à acquérir, lorsque le véhicule automobile (10) évolue sur une voie de circulation (31), des données relatives à des lignes de bord (33, 35) de ladite voie de circulation (31), et
- un actionneur de direction adapté à piloter le véhicule automobile (10), **caractérisé en ce qu'**il comporte en outre un calculateur (11) programmé pour mettre en oeuvre un procédé de pilotage conforme à l'une des revendications 1 à 9.

[Fig. 1]

[Fig. 2]

[Fig. 3]

$X_{ref}$ $+$ $28$ $-$ $X_{err}$ $20$ $\delta_{FBK}$ $+$ $27$ $\delta$ $22$

$X_{obs}$

$21$ $\delta_{FFD}$ $24$

$25$

$Y_{mes}$

$26$

[Fig. 4]

$33$ $31$

TG

$10$ T0 $31G$

$L_{31}$ $31C$

y $L_C$

$L_{10}$ TD $31D$

$35$

[Fig. 5]

[Fig. 6]

[Fig. 7]

Europäisches
Patentamt

European
Patent Office

Office européen
des brevets

# RAPPORT DE RECHERCHE EUROPEENNE

Numéro de la demande

**EP 23 21 3904**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/166032 A1 (LEE JIN-WOO [US] ET AL) 28 juin 2012 (2012-06-28) | 1-5,9-11 | INV. B60W30/12 B62D15/02 |
| Y | * alinéas [0015] - [0018], [0022] - [0024]; figure 2 * | 6-8 | |
| X | EP 3 330 161 A1 (HITACHI AUTOMOTIVE SYSTEMS LTD [JP]) 6 juin 2018 (2018-06-06) | 1-5,9-11 | |
| Y | * alinéas [0010], [0031], [0038], [0040], [0042] - [0044]; figure 7 * | 6-8 | |
| Y | DE 10 2012 214847 A1 (BOSCH GMBH ROBERT [DE]) 27 mars 2014 (2014-03-27) * alinéas [0007], [0010], [0012], [0018], [0029], [0030]; figure 1 * | 6-8 | |

DOMAINES TECHNIQUES
RECHERCHES (IPC)

**B60W**
**B62D**

Le présent rapport a été établi pour toutes les revendications

| Lieu de la recherche | Date d'achèvement de la recherche | Examinateur |
|---|---|---|
| **Munich** | **21 février 2024** | **Rameau, Pascal** |

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 23 21 3904**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**21-02-2024**

| Document brevet cité au rapport de recherche | Date de publication | Membre(s) de la famille de brevet(s) | Date de publication |
|---|---|---|---|
| US 2012166032 A1 | 28-06-2012 | CN 102529966 A | 04-07-2012 |
| | | DE 102011055820 A1 | 28-06-2012 |
| | | US 2012166032 A1 | 28-06-2012 |
| EP 3330161 A1 | 06-06-2018 | CN 107531280 A | 02-01-2018 |
| | | EP 3330161 A1 | 06-06-2018 |
| | | JP 6584509 B2 | 02-10-2019 |
| | | JP WO2017022474 A1 | 21-06-2018 |
| | | US 2018141588 A1 | 24-05-2018 |
| | | WO 2017022474 A1 | 09-02-2017 |
| DE 102012214847 A1 | 27-03-2014 | DE 102012214847 A1 | 27-03-2014 |
| | | WO 2014029599 A1 | 27-02-2014 |

EPO FORM P0460

Pour tout renseignement concernant cette annexe : voir Journal Officiel de l'Office européen des brevets, No.12/82